# EUROPÄISCHE PATENTSCHRIFT

(11) **EP 2 315 627 B1**
(45) Veröffentlichungstag und Bekanntmachung des Hinweises auf die Patenterteilung: **15.10.2014**
(21) Anmeldenummer: 09781680.5
(22) Anmeldetag: 11.08.2009
(51) Int. Cl.: C09B 67/08, B82Y 30/00, B01J 2/04

(54) **VERFAHREN ZUR HERSTELLUNG VON NANOSKALIGEN ORGANISCHEN FESTSTOFFPARTIKELN**
PROCESS FOR PRODUCING NANOSCALE ORGANIC SOLID PARTICLES
PROCÉDÉ DE FABRICATION DE PARTICULES SOLIDES ORGANIQUES NANOSCOPIQUES

(30) Priorität: 15.08.2008 EP 08162455
(43) Veröffentlichungstag der Anmeldung: 04.05.2011
(73) Patentinhaber: BASF SE, 67056 Ludwigshafen (DE)
(72) Erfinder: MERTLER, Michael, 67251 Freinsheim (DE); SACHWEH, Bernd, 67149 Meckenheim (DE); LINSENBUEHLER, Markus, 67069 Ludwigshafen (DE); HALPAP, Jörg, 68167 Mannheim (DE); RIPPERGER, Siegfried, 67724 Gonbach (DE); VOIGT, Tino, 67655 Kaiserslautern (DE); NIKOLAUS, Kai, 66424 Homburg (DE)
(86) Internationale Anmeldenummer: PCT/EP2009/060354
(87) Internationale Veröffentlichungsnummer: WO 2010/018155

(56) Entgegenhaltungen:
- EP-A- 0 324 986
- WO-A-2006/005536
- US-A- 3 791 110

## Beschreibung

Die Erfindung betrifft ein Verfahren zur Herstellung von nanoskaligen organischen Feststoffpartikeln durch Sublimation/Desublimation durch Entspannung in einer konvergenten Düse.

Als nanoskalig werden im Allgemeinen Feststoffpartikel bezeichnet, deren mittlerer Partikeldurchmesser im Submikronbereich liegt, das heißt kleiner als 1 µm, oder auch kleiner als 0,5 µm (500 nm), ist. Aufgrund ihrer Dimensionen weisen Nanopartikel Eigenschaften auf, die sich zum Teil grundlegend von den Eigenschaften jeweils derselben Substanz, jedoch in weniger feiner Verteilung, unterscheiden.

Nanoskalige organische Feststoffe können durch unterschiedliche Verfahren hergestellt werden, insbesondere durch Mahlen, Reaktionen in der Gasphase, Reaktionen in einer Flamme, durch Kristallisation, Fällung, Sol-Gel-Prozesse, oder durch Sublimation/Desublimation.

Hierbei ist es bekannt, die Desublimation durch schnelle Entspannung eines Inertgasstrahles, enthaltend den Ausgangsstoff zur Herstellung der nanoskaligen organischen Feststoffpartikel in molekular disperser Form in einer konvergenten Düse durchzuführen, deren engster Querschnitt so ausgelegt ist, dass der Inertgasstrom, enthaltend die Feststoffpartikel in molekular disperser Form auf eine Geschwindigkeit von Mach 1 oder größer beschleunigt wird. Bevorzugt handelt es sich hierbei um so genannte Laval-Düsen, das heißt eine Düsenform, bei der sich an einen konvergenten Eingangsteil ein divergenter Ausgangsteil anschließt.

So beschreibt Streletzky in Journal of Chemical Physics, Vol. 116, No. 10, 2002, Seiten 4058 bis 4061, eine kontrollierte Nukleation und ein kontrolliertes Wachstum von nanoskaligen Tropfen in Überschalldüsen, wobei der Versuch unternommen wurde, die Nukleationszone von der Wachstumszone zu trennen. Eine Entspannung des Freistrahls aus der Düse in eine spezielle Expansionskammer sowie eine Kühlung derselben wird nicht erwähnt.

Michael Türk beschreibt in seiner Habilltationsschrift "Erzeugung von organischen Nanopartikeln mit überkritischen Fluiden" an der TU Karlsruhe, 2001, Seiten 40 bis 43 sowie 46 bis 51 ein Verfahren zur Herstellung von organischen Nanopartikeln durch schnelle Expansion überkritischer Lösungen (RESS-Verfahren). Es werden Düsen mit Durchmessern im Bereich von 50 µm beschrieben und die Entspannung erfolgte in eine Expansionskammer. Das Dokument enthält keinen Hinweis auf eine Beeinflussung des Rückströmgebietes zur Steuerung der Partikelgeometrie.

Sane et al. beschreiben in The Royal Society of Chemistry, 2003, 2720-2721 die Herstellung von Porphyrin nach dem RESS-Verfahren (Rapid Expansion of Supercritical Solutions). Beim RESS-Verfahren wird die Eigenschaft verdichteter Gase ausgenutzt, Stoffe zu lösen. Meist wird Kohlendioxid hierfür verwendet. Die verwendeten Düsen hatten einen Durchmesser von 50 µm und ein Verhältnis von Durchmesser zu Länge von 1 : 4. Das Dokument gibt keinen Hinweis auf eine Expansionskammer sowie eine Beeinflussung des Rückströmgebietes in derselben.

In der Dissertation von Kodde (Universität Hannover, 1996), die in VDI-Fortschrittsberichte, Reihe 3, Nr. 451, 1996, veröffentlicht, werden auf den Seiten 22 bis 25 sowie 84 und 85 Untersuchungen zur heterogenen Desublimation beschrieben, wobei ein temperiertes Gasgemisch aus Luft und Bernsteinsäure durch Vermischen in einer Rohrströmung mit kalter Luft abgekühlt wurde. Infolge der Kühlung desublimierte die Bernsteinsäure an den in der Kühlluft enthaltenen submikronen Partikeln. In einer Fortführung dieser Arbeit wurde von Wagner (vgl. Chemie Ingenieur Technik, Vol. 71, 1999, Seiten 598 bis 601) das Gemisch aus Trägergas und Bernsteinsäuredampf mit dem die Keime enthaltenden Gasstrom vermischt. Die Desublimation wurde dann in einer Düse mit anschließender Kapillare durch die Entspannung des Gemisches initiiert. Die heterogene Kondensation erfolgte an den bereits vorhandenen Keimen. Keine der Arbeiten beschreibt eine Expansion in einer Expansionskammer und eine Beeinflussung des Rückströmgebietes in der Expansionskammer.

Nanopartikuläre organische Feststoffe werden in unterschiedlichen Bereichen eingesetzt. Hierbei ist es häufig erforderlich, vorgegebene Partikelgrößen, Partikelgrößenverteilungen oder Partikelformen einzuhalten. Diese können meist nicht durch die primär, beim Entspannungsvorgang gebildeten Partikeln gewährleistet werden.

Es war daher Aufgabe der Erfindung, die Geometrie von nanoskaligen organischen Feststoffpartikeln, die durch Entspannung beim Beschleunigen auf Schall- oder Überschallgeschwindigkeit erhalten wurden, insbesondere Partikelgröße, Partikelgrößenverteilung, Partikelform und gegebenenfalls Kristallstruktur zu steuern, um vorgegebenen Spezifikationen zu entsprechen.

Die Lösung besteht in einem Verfahren zur Herstellung von nanoskaligen organischen Feststoffpartikeln
- ausgehend von dem entsprechenden sublimierbaren organischen Feststoff als Rohmaterial,
- in Form von Partikeln mit einem mittleren Partikeldurchmesser im Bereich von 1 µm bis 10 mm,
- die in einem Trägergas dispergiert werden unter Erhalt einer Dispersion, enthaltend die Partikel des sublimierbaren organischen Feststoffes als disperse Phase im Trägergas als kontinuierlicher Phase
- wobei die Feststoffpartikel der Dispersion unter Wärmeeintrag auf eine Temperatur unterhalb der Zersetzungstemperatur in molekular disperser Form sublimiert werden unter Erhalt eines mit dem Rohmaterial in molekular disperser Form gesättigten oder untersättigten Trägergasstromes
- und wobei der Trägergasstrom enthaltend das Rohmaterial in molekular disperser Form einer konvergenten Düse zugeführt wird, deren engster Querschnitt so ausgelegt ist, dass der Trägergasstrom enthaltend das Rohmaterial in der konvergenten Düse auf eine Geschwindigkeit im Bereich von Mach 1 bis Mach 3 beschleunigt und anschließend in eine lang gestreckte Expansionskammer über eine Austrittsöffnung aus der konvergenten Düse als Freistrahl unter Erhalt eines übersättigten Trägergasstromes entspannt wird, woraus das Produkt, die nanoskaligen organischen Feststoffpartikel, desublimieren,
- wobei die Expansionskammer rotationssymmetrisch um die Längsachse der konvergenten Düse in Verlängerung der konvergenten Düse angeordnet und allseitig geschlossen ist, bis auf die Austrittsöffnung aus der konvergenten Düse an einem Ende und eine Produktaustrittsöffnung am anderen Ende der Expansionskammer, und ein Verhältnis von Länge, L, zu Durchmesser D, der Expansionskammer im Bereich von 15 bis 20 aufweist,
- wobei sich zwischen dem Freistrahl und der Innenwand der Expansionskammer ein Rückströmgebiet ausbildet, in dem der Trägergasstrom in entgegengesetzter Richtung zum Freistrahl umgelenkt und vom Freistrahl erneut angesaugt wird, dadurch gekennzeichnet, dass
in der Wand der Expansionskammer, die die Produktaustrittsöffnung umfasst, rotationssymmetrisch um die Mittelachse der Expansionskammer Öffnungen vorgesehen sind, durch die ein Sekundärgasstrom eingedüst wird, umfassend einen Gasträger und darin molekular dispers enthaltene Moleküle, Ionen oder nanoskalige Partikel, die vom Rohmaterial verschieden sind, und die einen mittleren Partikeldurchmesser aufweisen, der kleiner ist als der mittlere Partikeldurchmesser des Produktes.

Bevorzugt ist das Trägergas ein Inertgas.

Erfindungsgemäß wird somit ein Verfahren zur Verfügung gestellt, wonach über eine Beeinflussung des Rückströmgebietes, das den aus der konvergenten Düse mit einer Geschwindigkeit im Bereich von 340 m/s bis 1020 m/s (Mach 1 bis Mach 3) austretenden Freistrahl umhüllt und das von der Innenwand der Expansionskammer begrenzt wird, die Produkteigenschaften der durch Desublimation erhaltenen nanoskaligen organischen Feststoffpartikel, insbesondere der Größe, Größenverteilung, Form und gegebenenfalls Kristallstruktur gesteuert werden.

Hierzu wird in das Rückströmgebiet erfindungsgemäß ein Sekundärgasstrom eingedüst, die vom Rohmaterial verschieden sind, und die einen mittleren Partikeldurchmesser aufweisen, der kleiner ist als der mittlere Partikeldurchmesser des Produktes.

Das erfindungsgemäße Verfahren geht aus von dem dem Produkt entsprechenden sublimierbaren organischen Feststoff als Rohmaterial in Form von Partikeln mit einem mittleren Partikeldurchmesser im Bereich von 1 µm bis 10 mm.

Bevorzugt kann von Partikeln des Rohmaterials mit einem mittleren Partikeldurchmesser im Bereich von 1 µm bis 1 mm, oder auch von 1 µm bis 10 µm, ausgegangen werden.

In einem ersten Verfahrensschritt wird das Rohmaterial in einem Inertgasstrom dispergiert unter Erhalt einer Dispersion der Partikel des Rohmaterials als disperser Phase im Inertgas als kontinuierlicher Phase. Bei mittleren Partikeldurchmessern kleiner als 10 µm wird die erhaltene Dispersion üblicherweise als Aerosol bezeichnet.

Das Rohmaterial wird im Inertgas bevorzugt unter Druck, insbesondere unter einem Druck im Bereich von 1,5 bis 10 bar absolut, weiter bevorzugt unter einem Druck im Bereich von 1,5 bis 3 bar absolut, dispergiert.

Das Inertgas, in das das Rohmaterial dispergiert wird, sowie der Inertgasträger für den Sekundärgasstrom ist bevorzugt Stickstoff.

In einem nächsten Verfahrensschritt wird die Dispersion oder das Aerosol durch Wärmeeintrag auf eine Temperatur unterhalb der Zersetzungstemperatur des Rohmaterials in molekular disperser Form sublimiert. Bevorzugt wird hierbei auf eine Temperatur im Bereich von 300 bis 800°C erwärmt. Dabei wird ein mit dem Rohmaterial in molekular disperser Form gesättigter oder ungesättigter Inertgasstrom erhalten.

Hieraus werden bevorzugt nicht-sublimierbare, feste Verunreinigungen, die zusammen mit dem Rohmaterial in den Inertgasstrom eingebracht wurden, in einem Abscheider, bevorzugt einem Heißgasfilter, einem Zyklon oder einem Elektrofilter, abgetrennt.

Der Inertgasstrom enthaltend das Rohmaterial in molekular disperser Form, und woraus gegebenenfalls nicht-sublimierte, feste Verunreinigungen abgetrennt wurden, kann bevorzugt einer Mischkammer zugeführt werden, worin durch eine Querschnittsvergrößerung die Strömung vergleichmäßigt wird. Die Mischkammer ist bevorzugt vertikal angeordnet.

Das gegebenenfalls in einer Mischkammer homogenisierte Inertgas mit darin in molekular disperser Form enthaltenen Feststoffpartikeln wird anschließend einer konvergenten Düse zugeführt, deren engster Querschnitt so ausgelegt ist, dass der Inertgasstrom, enthaltend das Rohmaterial in molekular disperser Form auf eine Geschwindigkeit im Bereich von 340 m/s bis 1020 m/s (Mach 1 bis Mach 3) beschleunigt wird. Hierbei wird der heiße Inertgasstrom plötzlich entspannt und dabei stark abgekühlt, wobei eine sehr hohe Übersättigung erzeugt wird. Weil dieser Vorgang extrem kurz ist, kann man ihn näherungsweise als adiabatisch betrachten.

Der konvergenten Düse kann sich bevorzugt ein weiterer, divergenter Düsenteil anschließen, so dass die Düse insgesamt als Laval-Düse bezeichnet werden kann, das heißt eine Düsenform, umfassend einen konvergenten Teil im Eintrittsbereich und einen divergenten Teil im Austrittsbereich, die im Bereich des engsten Querschnitts miteinander verbunden sind, und der so ausgelegt ist, dass eine Beschleunigung des Gasstromes auf eine Geschwindigkeit im Bereich von 340 m/s bis 1020 m/s (Mach 1 bis Mach 3) erfolgt.

Die Mach-Zahl ist in bekannter Weise eine physikalische und dimensionslose Kennzahl der Geschwindigkeit. Sie gibt das Verhältnis von Trägheitskräften zu Kompressionskräften an und reduziert sich auf das Verhältnis des Betrages einer Geschwindigkeit V, beispielsweise eines Körpers oder eines Fluids zur Schallgeschwindigkeit c im umgebenden Fluid (vgl.-Mach-Zahl aus Wikipedia).

Die konvergente Düse oder bevorzugt die Laval-Düse mündet über eine Austrittsöffnung als Freistrahl in eine lang gestreckte Expansionskammer, deren Verhältnis von Länge L zu Durchmesser D im Bereich von 5 bis 20 ausgelegt ist.

In der konvergenten oder der Laval-Düse und der angeschlossenen Expansionskammer findet durch die Abkühlung und die damit einhergehende Übersättigung eine Desublimation statt. Der Grad der Übersättigung hängt insbesondere von der Massenkonzentration des Rohmaterials in molekular disperser Form im Inertgas vor der konvergenten oder konvergent-divergenten Düse (Laval-Düse) sowie von der spezifischen Dampfdruckkurve des Rohmaterials ab. Insbesondere bei hochmolekularen Stoffen verschiebt sich aufgrund des niedrigen Dampfdrucks die Partikelbildung in Richtung der Expansionskammer. Dadurch gewinnt die Verweilzeit in der Expansionskammer, das heißt im Freistrahl sowie im Rückströmgebiet eine wesentliche Bedeutung für die Partikelneubildung und das Partikelwachstum. Über die Einflussnahme auf die Verweilzeit können Partikeleigenschaften, insbesondere Größe, Größenverteilung, Form sowie gegebenenfalls Kristallstruktur gesteuert werden. Durch das erfindungsgemäße Verfahren wird insbesondere die Verweilzeit in der Expansionskammer verlängert und/oder es werden durch Einbringen eines Sekundärgasstromes mit darin molekular dispers enthaltenen Molekülen, Ionen oder nanoskaligen Partikel, die vom Rohmaterial verschieden sind, die Partikelbildung angeregt und damit die Partikeleigenschaften gesteuert.

Als Freistrahl wird ein Strahl bezeichnet, der aus einer Düse in die freie Umgebung ohne Wandbegrenzung ausströmt. Das aus der Düse ausströmende Fluid und das Fluid der Umgebung haben unterschiedliche Geschwindigkeiten. Das den Freistrahl umgebende Fluid wird angesaugt und mitgerissen.

Demgegenüber wird als Rückströmgebiet vorliegend der den Freistrahl umhüllende Bereich zwischen dem Freistrahl und der Innenwand der Expansionskammer bezeichnet, indem der Inertgasstrom in entgegengesetzter Richtung zum expandierenden Freistrahl umgelenkt und vom Freistrahl erneut angesaugt wird. Die Strömungsgeschwindigkeit im Rückströmgebiet ist deutlich niedriger als im Freistrahl. Theoretische Ansätze zur Beschreibung von Rückströmungen basieren auf der erweiterten Prandtlschen Grenzschichttheorie.

Indem erfindungsgemäß ein Sekundärgasstrom eingedüst wird, umfassend einen Inertgasträger und darin molekular dispers enthaltene Moleküle, Ionen oder nanoskalige Partikel, die vom Rohmaterial verschieden sind, wird durch diese so genannten Seedingpartikel oder Keimbildner eine heterogene Desublimation initiiert.

Der Sekundärgasstrom wird erfindungsgemäß über Öffnungen eingebracht, die in der Wand der Expansionskammer, die die Produktaustrittsöffnung umfasst und die der Austrittsöffnung aus der konvergenten Düse oder der konvergent-divergenten Düse gegenüberliegt, rotationssymmetrisch um die Mittelachse der Expansionskammer angeordnet sind.

Die rotationssymmetrisch um die Mittelachse der Expansionskammer angeordneten Öffnungen können auch miteinander zu einem Ringspalt verbunden sein.

Zur Steuerung der Verweilzeit für die Keimbildung und das Partikelwachstum wird das Verhältnis des Durchmessers der Austrittsöffnung aus der konvergenten Düse oder der Laval-Düse, d zum Durchmesser der Expansionskammer D, vorteilhaft im Bereich von 5 bis 100 ausgelegt. Über das Verhältnis aus dem Durchmesser der Austrittsöffnung aus der konvergenten Düse oder der Laval-Düse, d, zum Durchmesser der Expansionskammer, D, wird die Keimbildung und das Partikelwachstum des durch Desublimation erhaltenen Produktes gesteuert.

Die Beeinflussung des Rückströmgebiets kann vorteilhaft zusätzlich durch Kühlen der Wand der Expansionskammer erfolgen.

Die Kühlung kann in einer Ausführungsform mittels eines von einem Kühlmedium durchströmten Doppelmantels erfolgen.

Zusätzlich können zu Kühlung Kühlrippen vorgesehen sein, die von der Wand der Expansionskämmer in den Innenraum der Expansionskammer hineinragen.

In einer weiteren Ausführungsform kann ein zusätzlicher Sekundärgasstrom über zwei oder mehrere Öffnungen am Mantel der Expansionskammer eingedüst oder eingesaugt werden, die bevorzugt symmetrisch angeordnet sind. Der Sekundärgasstrom, der über die zwei oder mehreren Öffnungen am Mantel der Expansionskammer eingebracht wird, umfasst einen Inertgasträger und darin molekular dispers enthaltene Moleküle, Ionen oder nanoskalige Partikel, die vom Rohmaterial verschieden sind, und die einen mittleren Partikeldurchmesser aufweisen, der kleiner ist als der mittlere Partikeldurchmesser des Produktes.

Zusätzlich oder alternativ zu zwei oder mehreren Öffnungen am Mantel der Expansionskammer können in der Wand der Expansionskammer, die die Austrittsöffnung aus der konvergenten Düse umfasst, zwei oder mehrere Öffnungen für die Zuführung eines Sekundärgasstromes vorgesehen sein, umfassend einen Inertgasträger und molekular dispers darin enthaltene Moleküle, Ionen oder nanoskalige Partikel, die vom Rohmaterial verschieden sind und die einen mittleren Partikeldurchmesser aufweisen, der kleiner ist als der mittlere Partikeldurchmesser des Produktes.

In einer weiteren Ausführungsform können zusätzlich oder alternativ im Rückströmgebiet in der Expansionskammer Leitbleche vorgesehen sein, die bevorzugt gekühlt sind. Vorteilhaft kann zwischen den im Rückströmgebiet angeordneten Leitblechen und der Innenwand der Expansionskammer eine elektrische Spannung angelegt werden.

Ein bevorzugtes Anwendungsgebiet der mit dem erfindungsgemäßen Verfahren erzeugten Partikel sind organische Halbleiter, zum Beispiel optische Displays, Solarzellen oder Gasdetektoren. Gerade bei optischen Displays und Halbleiterbauteilen, wie OLEDs und OFEDs, sind kleine Partikelgrößen und enge Partikelgrößenverteilungen für die Produkteigenschaften von grundlegender Bedeutung. Für derartige Halbleiterbauteile werden beispielsweise Phthalocyanine eingesetzt.

Ein weiteres bevorzugtes Anwendungsgebiet ist das Leiterbahnenprinting. Für spezielle Anwendungszwecke, beispielsweise elektronische Zeitungen, oder thermoelektrische Strömungssensoren, werden extrem dünnschichtige Leiterbahnen benötigt. Diese können durch spezielle Druckverfahren auf eine Platine aufgebracht werden. Hierfür müssen jedoch die in der Tintensuspension enthaltenen Partikel spezielle Anforderungen bezüglich Größe und Form erfüllen, meistens eine sehr eng verteilte disperse Phase und gegebenenfalls eine spezielle kristalline Phase. So ist beispielsweise die Betaphase des Kupferphthalocyanins thermisch sehr stabil und besitzt gute Halbleitereigenschaften.

Weitere bevorzugte Einsatzgebiete für das erfindungsgemäße Verfahren sind organische Nanopigmente für Lacke, beispielsweise das Nanobindemittel COL.9® der BASF SE, Lacke mit Lotuseffekt, optische Funktionsschichten, Katalysatoren, selbstreinigende Oberflächen, transparente kratzfeste Beschichtungen, Kosmetika oder biokompatible Oberflächen.

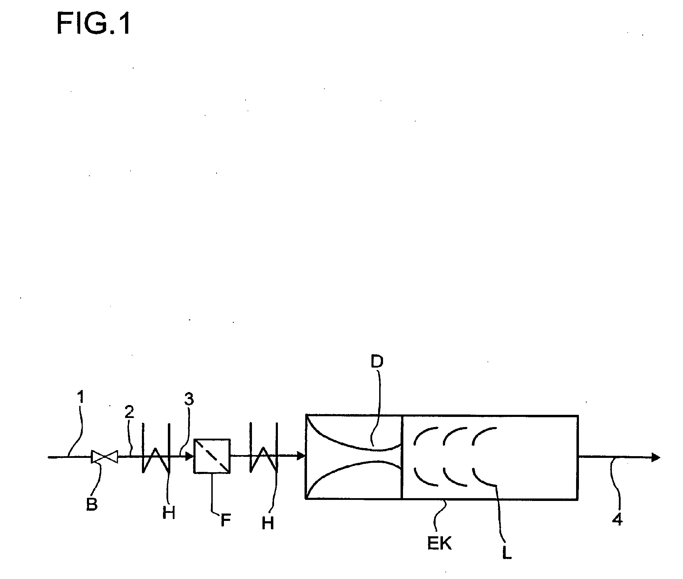

Die Erfindung wird im Folgenden anhand einer Zeichnung näher erläutert:
Die einzige Figur 1 zeigt die schematische Darstellung einer Anlage zur Durchführung einer bevorzugten Ausführungsform des erfindungsgemäßen Verfahrens.

Ein Feedstrom 1, umfassend ein Inertgas sowie sublimierbare organische Feststoffpartikel als Rohmaterial, wird über einen Bürstendosierer B geleitet, wobei die sublimierbaren organischen Feststoffpartikel im Inertgas dispergiert werden. Die hierbei erhaltene Dispersion 2 wird in einem Heizofen H auf eine Temperatur aufgeheizt, bei der die organischen Feststoffpartikel des Rohmaterials sublimieren, die jedoch niedriger ist als die Zersetzungstemperatur derselben. Hierbei wird ein mit dem Rohmaterial in molekular disperser Form gesättigter oder untersättigter Inertgasstrom 3 erhalten, der noch nicht sublimierbare Feststoffpartikel aus dem Strom 1 enthalten kann. Für Entfernung derselben wird Strom 3 beispielhaft über einen Heißgasfilter F geleitet. Der gefilterte Strom kann über eine weitere Heizung H zur Temperierung und anschließend einer bevorzugt konvergent-divergenten Düse D zugeführt werden. An die Austrittsöffnung der Düse D schließt sich eine Expansionskammer EK an, die gekühlte Wände (in der Figur ist eine Ausführungsform ohne Wandkühlung dargestellt) und die in einer bevorzugten Ausführungsform Leitbleche L aufweisen kann. Aus der Austrittsöffnung der Expansionskammer EK am entgegengesetzten Ende bezogen auf die Austrittsöffnung aus der konvergent/divergenten Düse in die Expansionskammer, wird der Produktgasstrom, enthaltend die nanoskaligen organischen Feststoffpartikel, Strom 4, abgezogen.

## Patentansprüche

1. Verfahren zur Herstellung von nanoskaligen organischen Feststoffpartikeln
- ausgehend von dem entsprechenden sublimierbaren organischen Feststoff als Rohmaterial,
- in Form von Partikeln mit einem mittleren Partikeldurchmesser im Bereich von 1 µm bis 10 mm,
- die in einem Trägergas dispergiert werden unter Erhalt einer Dispersion, enthaltend die Partikel des sublimierbaren organischen Feststoffes als disperse Phase im Trägergas als kontinuierlicher Phase
- wobei die Feststoffpartikel der Dispersion unter Wärmeeintrag auf eine Temperatur unterhalb der Zersetzungstemperatur in molekular disperser Form sublimiert werden unter Erhalt eines mit dem Rohmaterial in molekular disperser Form gesättigten oder untersättigten Trägergasstromes
- und wobei der Trägergasstrom enthaltend das Rohmaterial in molekular disperser Form einer konvergenten Düse zugeführt wird, deren engster Querschnitt so ausgelegt ist, dass der Trägergasstrom enthaltend das Rohmaterial in der konvergenten Düse auf eine Geschwindigkeit im Bereich von 340 m/s bis 1020 m/s (Mach 1 bis Mach 3) beschleunigt und anschließend in eine lang gestreckte Expansionskammer über eine Austrittsöffnung aus der konvergenten Düse als Freistrahl unter Erhalt eines übersättigten Trägergasstromes entspannt wird, woraus das Produkt, die nanoskaligen organischen Feststoffpartikel, desublimieren,
- wobei die Expansionskammer rotationssymmetrisch um die Längsachse der konvergenten Düse in Verlängerung der konvergenten Düse angeordnet und allseitig geschlossen ist, bis auf die Austrittsöffnung aus der konvergenten Düse an einem Ende und eine Produktaustrittsöffnung am anderen Ende der Expansionskammer, und ein Verhältnis von Länge, L, Durchmesser D, im Bereich von 5 bis 20 aufweist,
- wobei sich zwischen dem Freistrahl und der Innenwand der Expansionskammer ein Rückströmgebiet ausbildet, in dem der Trägergasstrom in entgegengesetzter Richtung zum Freistrahl umgelenkt und vom Freistrahl erneut angesaugt wird, **dadurch gekennzeichnet, dass**
in der Wand der Expansionskammer, die die Produktaustrittsöffnung umfasst, rotationssymmetrisch um die Mittelachse der Expansionskammer Öffnungen vorgesehen sind, durch die ein Sekundärgasstrom eingedüst wird, umfassend einen Gasträger und darin molekular dispers enthaltene Moleküle, Ionen oder nanoskalige Partikel, die vom Rohmaterial verschieden sind, und die einen mittleren Partikeldurchmesser aufweisen, der kleiner ist als der mittlere Partikeldurchmesser des Produktes.

2. Verfahren nach Anspruch 1, **dadurch gekennzeichnet, dass** das Rohmaterial in Form von Partikeln mit einem mittleren Partikeldurchmesser im Bereich von 1 µm bis 1 mm eingesetzt wird.

3. Verfahren nach Anspruch 1 oder 2, **dadurch gekennzeichnet, dass** die konvergente Düse in Form einer Laval-Düse ausgebildet ist, indem sich an einen konvergenten ersten Bereich der Düse ein divergenter zweiter Bereich anschließt.

4. Verfahren nach einem der Ansprüche 1 bis 3, **dadurch gekennzeichnet, dass** die rotationssymmetrisch um die Mittelachse der Expansionskammer vorgesehenen Öffnungen zu einem Ringspalt miteinander verbunden sind.

5. Verfahren nach einem der Ansprüche 1 bis 4, **dadurch gekennzeichnet, dass** das Trägergas, in das das Rohmaterial dispergiert wird sowie der Gasträger für den Sekundärgasstrom ein Inertgas bevorzugt Stickstoff ist.

6. Verfahren nach einem der Ansprüche 1 bis 5, **dadurch gekennzeichnet, dass** das Rohmaterial im Inertgas unter einem Druck im Bereich von 1,5 bis 10 bar absolut, bevorzugt unter einem Druck im Bereich von 1,5 bis 3 bar absolut, dispergiert wird.

7. Verfahren nach einem der Ansprüche 1 bis 5, **dadurch gekennzeichnet, dass** aus dem Inertgasstrom, enthaltend das Rohmaterial in molekular disperser Form nicht-sublimierbare, feste Verunreinigungen, die zusammen mit dem Rohmaterial eingebracht wurden, in einem Abscheider, bevorzugt einem Heißgasfilter, einem Zyklon oder einem Elektrofilter, abgetrennt werden.

8. Verfahren nach einem der Ansprüche 1 bis 7, **gekennzeichnet durch** ein Verhältnis des Durchmessers der Austrittsöffnung aus der konvergenten Düse, d zum Durchmesser der Expansionskammer, D, im Bereich von 5 bis 100.

9. Verfahren nach einem der Ansprüche 1 bis 8, **dadurch gekennzeichnet, dass** die Wand der Expansionskammer gekühlt ist.

10. Verfahren nach Anspruch 9, **dadurch gekennzeichnet, dass** die Kühlung mittels eines von einem Kühlmedium durchströmten Doppelmantels erfolgt.

11. Verfahren nach Anspruch 9 oder 10, **dadurch gekennzeichnet, dass** die Kühlung mittels Kühlrippen erfolgt, die von der Wand der Expansionskammer in den Innenraum der Expansionskammer hineinragen.

12. Verfahren nach einem der Ansprüche 1 bis 11, **dadurch gekennzeichnet, dass** zwei oder mehrere Öffnungen am Mantel der Expansionskammer, bevorzugt symmetrisch, vorgesehen sind, durch die ein Sekundärgasstrom eingedüst oder eingesaugt wird, umfassend einen Inertgasträger und darin molekular dispers enthaltene Moleküle, Ionen oder nanoskalige Partikel, die vom Rohmaterial verschieden sind, und die einen mitterlen Partikeldurchmesser aufweisen, der kleiner ist als der mittlere Partikeldurchmesser des Produktes.

13. Verfahren nach einem der Ansprüche 1 bis 12, **dadurch gekennzeichnet, dass** in der Wand der Expansionskammer, die die Austrittsöffnung aus der konvergenten Düse umfasst, zwei oder mehrere Öffnungen für die Zuführung eines Sekundärgasstromes vorgesehen sind, umfassend einen Inertgasträger und darin molekular dispers enthaltene Moleküle, Ionen oder nanoskalige Partikel, die vom Rohmaterial verschieden sind, und die einen mittleren Partikeldurchmesser aufweisen, der kleiner ist als der mittlere Partikeldurchmesser des Produktes.

14. Verfahren nach einem der Ansprüche 1 bis 13, **dadurch gekennzeichnet, dass** im Rückströmgebiet in der Expansionskammer Leitbleche vorgesehen sind, die bevorzugt gekühlt sind.

15. Verfahren nach Anspruch 14, **dadurch gekennzeichnet, dass** zwischen den im Rückströmgebiet angeordneten Leitblechen und der Innenwand der Expansionskammer eine elektrische Spannung angelegt wird.

## Claims

1. A method for producing nanoscale organic solid particles
- starting from the corresponding sublimable organic solid as raw material,
- in the form of particles having an average particle diameter in the range of from 1 µm to 10 mm,
- which are dispersed in a carrier gas so as to obtain a dispersion, containing the particles of the sublimable organic solid as a disperse phase in the carrier gas as a continuous phase,
- the solid particles of the dispersion being sublimed in molecularly disperse form by supplying heat at a temperature below the decomposition temperature, so as to obtain a carrier gas flow saturated or unsaturated with the raw material in molecularly disperse form,
- and the carrier gas flow containing the raw material in molecularly disperse form being delivered to a convergent nozzle whose narrowest cross section is configured so that the carrier gas flow containing the raw material is accelerated in the convergent nozzle to a velocity in the range of from 340 m/s to 1020 m/s (Mach 1 to Mach 3) and is subsequently relaxed as a free jet through an outlet opening from the convergent nozzle into an elongated expansion chamber so as to obtain a supersaturated carrier gas flow from which the product, i.e. the nanoscale organic solid particles, desublimes,
- the expansion chamber being arranged rotationally symmetrically about the longitudinal axis of the convergent nozzle, in extension of the convergent nozzle, and being closed on all sides except for the outlet opening from the convergent nozzle at one end and a product outlet opening at the other end of the expansion chamber, and having a ratio of length L to diameter D in the range of from 5 to 20,
- a reflux region being formed between the free jet and the inner wall of the expansion chamber, in which the carrier gas flow is deflected in the opposite direction to the free jet and is sucked in again by the free jet, wherein
openings are provided rotationally symmetrically about the midaxis of the expansion chamber in the wall of the expansion chamber which comprises the product outlet opening, through which openings a secondary gas flow is injected comprising a gas carrier and molecules, ions or nanoscale particles contained in molecularly disperse form therein, which are different from the raw material and which have an average particle diameter that is less than the average particle diameter of the product.

2. The method according to claim 1, wherein the raw material is used in the form of particles having an average particle diameter in the range of from 1 µm to 1 mm.

3. The method according to claim 1 or 2, wherein the convergent nozzle is designed in the form of a Laval nozzle, in which a convergent first region of the nozzle is followed by a divergent second region.

4. The method according to one of claims 1 to 3, wherein the openings provided rotationally symmetrically about the midaxis of the expansion chamber are connected together to form an annular gap.

5. The method according to one of claims 1 to 4, wherein the carrier gas in which the raw material is dispersed, as well as the gas carrier for the secondary gas flow, is an inert gas, preferably nitrogen.

6. The method according to one of claims 1 to 5, wherein the raw material is dispersed in the inert gas at a pressure in the range of from 1.5 to 10 bar absolute, preferably at a pressure in the range of from 1.5 to 3 bar absolute.

7. The method according to one of claims 1 to 5, wherein non-sublimable solid impurities, which were introduced together with the raw material, are removed from the inert gas flow containing the raw material in molecularly disperse form in a separator, preferably a hot gas filter, a cyclone or an electrofilter.

8. The method according to one of claims 1 to 7, having a ratio of the diameter of the outlet opening from the convergent nozzle, d, to the diameter of the expansion chamber, D, in the range of from 5 to 100.

9. The method according to one of claims 1 to 8, wherein the wall of the expansion chamber is cooled.

10. The method according to claim 9, wherein the cooling is carried out by means of a double casing through which a coolant flows.

11. The method according to claim 9 or 10, wherein the cooling is carried out by means of cooling fins, which extend from the wall of the expansion chamber into the interior of the expansion chamber.

12. The method according to one of claims 1 to 11, wherein two or more openings are provided, preferably symmetrically, on the casing of the expansion chamber, through which openings a secondary gas flow is injected or sucked comprising an inert gas carrier and molecules, ions or nanoscale particles contained in molecularly disperse form therein, which are different from the raw material and which have an average particle diameter that is less than the average particle diameter of the product.

13. The method according to one of claims 1 to 12, wherein two or more openings are provided in the wall of the expansion chamber which comprises the outlet opening from the convergent nozzle, in order to deliver a secondary gas flow comprising an inert gas carrier and molecules, ions or nanoscale particles contained in molecularly disperse form therein, which are different from the raw material and which have an average particle diameter that is less than the average particle diameter of the product.

14. The method according to one of claims 1 to 13, wherein guide vanes, which are preferably cooled, are provided in the reflux region in the expansion chamber.

15. The method according to claim 14, wherein an electrical voltage is applied between the guide vanes arranged in the reflux region and the inner wall of the expansion chamber.

## Revendications

1. Procédé de fabrication de particules solides organiques nanométriques
- à partir du solide organique sublimable correspondant en tant que matière première,
- sous la forme de particules ayant un diamètre de particule moyen dans la plage allant de 1 µm à 10 mm,
- qui sont dispersées dans un gaz vecteur pour obtenir une dispersion contenant les particules du solide organique sublimable sous la forme d'une phase dispersée dans le gaz vecteur en tant que phase continue,
- les particules solides de la dispersion étant sublimées par apport de chaleur à une température inférieure à la température de décomposition sous forme dispersée moléculairement pour obtenir un courant de gaz vecteur saturé ou sous-saturé avec la matière première sous forme dispersée moléculairement,
- et le courant de gaz vecteur contenant la matière première sous forme dispersée moléculairement étant introduit dans une buse convergente dont la section transversale la plus étroite est configurée de sorte que le courant de gaz vecteur contenant la matière première soit accéléré dans la buse convergente à une vitesse dans la plage allant de 340 m/s à 1 020 m/s (Mach 1 à Mach 3), puis détendu dans une chambre d'expansion étendue longitudinalement par une ouverture de sortie de la buse convergente sous la forme d'un jet libre pour obtenir un courant de gaz vecteur sursaturé, le produit, les particules solides organiques nanométriques, étant ainsi désublimé,
- la chambre d'expansion étant agencée de manière symétrique par rotation autour de l'axe longitudinal de la buse convergente dans le prolongement de la buse convergente et étant fermée de tous les côtés, à l'exception de l'ouverture de sortie de la buse convergente à une extrémité et d'une ouverture de sortie du produit à l'autre extrémité de la chambre d'expansion, et présentant un rapport entre la longueur L et le diamètre D dans la plage allant de 5 à 20,
- une zone d'écoulement inversé se formant entre le jet libre et la paroi intérieure de la chambre d'expansion, dans laquelle le courant de gaz vecteur est dévié dans la direction opposée au jet libre et ré-aspiré par le jet libre, **caractérisé en ce que**
dans la paroi de la chambre d'expansion qui comprend l'ouverture de sortie du produit, des ouvertures sont agencées de manière symétrique par rotation autour de l'axe central de la chambre d'expansion, par lesquelles un courant gazeux secondaire est injecté, comprenant un vecteur gazeux et des molécules, des ions ou des particules nanométriques différentes de la matière première et présentant un diamètre de particule moyen inférieur au diamètre de particule moyen du produit, contenus dans celui-ci sous forme dispersée moléculairement.

2. Procédé selon la revendication 1, **caractérisé en ce que** la matière première est utilisée sous la forme de particules ayant un diamètre de particule moyen dans la plage allant de 1 µm à 1 mm.

3. Procédé selon la revendication 1 ou 2, **caractérisé en ce que** la buse convergente est configurée sous la forme d'une buse de Laval, dans laquelle une première zone convergente de la buse est suivie par une seconde zone divergente.

4. Procédé selon l'une quelconque des revendications 1 à 3, **caractérisé en ce que** les ouvertures agencées de manière symétrique par rotation autour de l'axe central de la chambre d'expansion sont reliées les unes avec les autres en une fente annulaire.

5. Procédé selon l'une quelconque des revendications 1 à 4, **caractérisé en ce que** le gaz vecteur dans lequel la matière première est dispersée ainsi que le vecteur gazeux du courant gazeux secondaire sont un gaz inerte, de préférence de l'azote.

6. Procédé selon l'une quelconque des revendications 1 à 5, **caractérisé en ce que** la matière première est dispersée dans le gaz inerte à une pression dans la plage allant de 1,5 à 10 bar absolu, de préférence à une pression dans la plage allant de 1,5 à 3 bar absolu.

7. Procédé selon l'une quelconque des revendications 1 à 5, **caractérisé en ce que** des impuretés solides non sublimables, qui ont été introduites conjointement avec la matière première, sont séparées du courant de gaz inerte contenant la matière première sous forme dispersée moléculairement dans un séparateur, de préférence dans un filtre à gaz chaud, un cyclone ou un dépoussiéreur électrostatique.

8. Procédé selon l'une quelconque des revendications 1 à 7, **caractérisé par** un rapport entre le diamètre de l'ouverture de sortie de la buse convergente d et le diamètre de la chambre d'expansion D dans la plage allant de 5 à 100.

9. Procédé selon l'une quelconque des revendications 1 à 8, **caractérisé en ce que** la paroi de la chambre d'expansion est refroidie.

10. Procédé selon la revendication 9, **caractérisé en ce que** le refroidissement a lieu au moyen d'une double enveloppe traversée par un agent réfrigérant.

11. Procédé selon la revendication 9 ou 10, **caractérisé en ce que** le refroidissement a lieu au moyen d'ailettes de refroidissement qui s'étendent depuis la paroi de la chambre d'expansion dans l'espace intérieur de la chambre d'expansion.

12. Procédé selon l'une quelconque des revendications 1 à 11, **caractérisé en ce que** deux ouvertures ou plus sont agencées sur l'enveloppe de la chambre d'expansion, de préférence de manière symétrique, par lesquelles un courant gazeux secondaire est injecté ou aspiré, comprenant un vecteur gazeux inerte et des molécules, des ions ou des particules nanométriques différentes de la matière première et présentant un diamètre de particule moyen inférieur au diamètre de particule moyen du produit, contenus dans celui-ci sous forme dispersée moléculairement.

13. Procédé selon l'une quelconque des revendications 1 à 12, **caractérisé en ce que**, dans la paroi de la chambre d'expansion qui comprend l'ouverture de sortie de la buse convergente, deux ouvertures ou plus sont agencées, pour l'introduction d'un courant gazeux secondaire, comprenant un vecteur gazeux inerte et des molécules, des ions ou des particules nanométriques différentes de la matière première et présentant un diamètre de particule moyen inférieur au diamètre de particule moyen du produit, contenus dans celui-ci sous forme dispersée moléculairement.

14. Procédé selon l'une quelconque des revendications 1 à 13, **caractérisé en ce que** des plaques de déviation, qui sont de préférence refroidies, sont prévues dans la zone d'écoulement inversé dans la chambre d'expansion.

15. Procédé selon la revendication 14, **caractérisé en ce qu'**une tension électrique est appliquée entre les plaques de déviation agencées dans la zone d'écoulement inversé et la paroi intérieure de la chambre d'expansion.
